# FASCICULE DE BREVET EUROPEEN

(11) **EP 0 530 078 B1**
(45) Date de publication et mention de la délivrance du brevet: **26.07.1995**
(21) Numéro de dépôt: 92402300.5
(22) Date de dépôt: 19.08.1992
(51) Int. Cl.: F02K 1/56, F02K 1/70, F02K 1/60

(54) **Inverseur de poussée de turboréacteur ayant un bord de déviation à courbure évolutive**
Schubumkehrvorrichtung mit einer gekrümmten Umlenkkante für einen Strahlmotor
Thrust reverser having a curved downstream edge

(30) Priorité: 21.08.1991 FR 9110475
(43) Date de publication de la demande: 03.03.1993
(73) Titulaire: HISPANO-SUIZA, F-92213 Saint Cloud (FR)
(72) Inventeur: Carimali, Félix, F-76600 Le Havre (FR); Legras, Michel Jean Lucien, F-76600 Le Havre (FR)
(74) Mandataire: Berrou, Paul

(56) Documents cités:
- EP-A- 0 352 171
- FR-A- 2 559 838
- GB-A- 638 063
- GB-A- 2 075 447

## Description

Dans ce type de turboréacteur comprenant un canal primaire de circulation des gaz dits de flux chaud constituant une veine principale d'éjection et un canal annulaire, coaxial au canal primaire, où circulent des gaz dits de flux froid, à la sortie par exemple d'une soufflante située à l'entrée du turboréacteur, et constituant une veine secondaire d'éjection, particulièrement lorsque le taux de dilution est élevé, l'inversion de poussée met en oeuvre principalement ou uniquement la dérivation du flux secondaire froid.

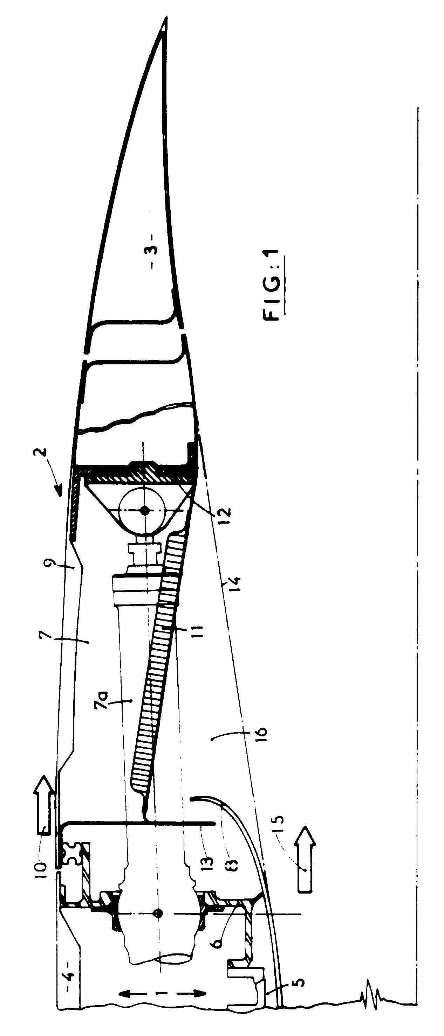

La figure 1 des dessins joints montre un exemple connu de réalisation d'un inverseur de poussée de ce type composé de trois parties principales, une partie fixe 1, située en amont, dans le prolongement de la paroi externe du canal de flux secondaire qui est délimité intérieurement par l'enveloppe de structure centrale du turboréacteur, une partie mobile 2 et une virole arrière fixe 3. Ladite partie fixe amont 1 comprend un panneau externe 4 de nacelle, un panneau interne 5 limitant extérieurement la veine du flux secondaire et un cadre avant 6 qui assure la jonction desdits panneaux 4 et 5. Ledit cadre avant 6 sert également de support au dispositif de commande des déplacements de la partie mobile 2 qui est essentiellement composée d'un certain nombre d'éléments déplaçables, ou obstacles communément appelés portes 7, ce nombre pouvant varier en fonction des applications particulières, par exemple deux, trois ou quatre portes 7 formant un ensemble annulaire, éventuellement en coopération avec une partie fixe, selon le mode de montage de l'ensemble de propulsion constitué par le turboréacteur sur l'avion.

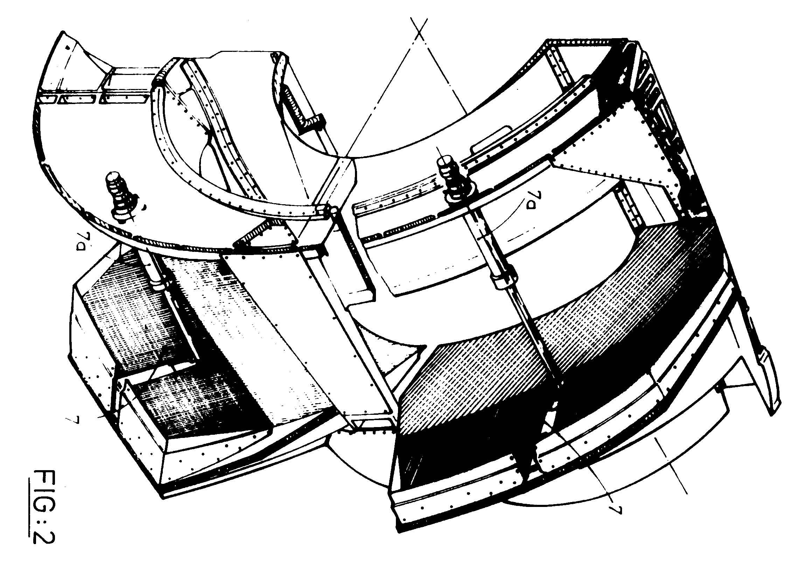

La figure 2 montre, selon une vue schématique partielle en perspective un exemple d'application d'un tel inverseur de poussée à un turboréacteur à double flux, l'inverseur comportant dans ce cas quatre portes 7 dont deux sont visibles sur la figure 2 et sont montrées ouvertes, correspondant à un fonctionnement en inversion de poussée. Chaque porte 7 est associée à un moyen de commande des déplacements tels qu'un vérin 7a.

En aval de la partie fixe 1, amont et aval étant définis par rapport au sens normal de circulation des gaz en poussée directe, la structure est prolongée par un bord de déviation 8, fixé sous le cadre avant 6 et destiné à assurer une orientation adéquate de l'écoulement, en position d'inversion de poussée. Chaque porte 7 est composée d'un panneau externe 9 venant se placer en position jet direct dans le prolongement du panneau externe 4 de la partie fixe amont 1 pour constituer la paroi aérodynamique continue limitant le flux extérieur au moteur représenté par la flèche 10, d'un panneau interne 11 et d'une structure intérieure formée de raidisseurs 12, assurant la liaison entre les panneaux 9 et 11. La porte 7 est complétée par un ensemble de déflecteurs destinés à canaliser l'écoulement inversé lorsque l'inverseur se trouve en position d'inversion de poussée et la porte 7 en position ouverte ou déployée. Cet ensemble comporte notamment en amont de la porte 7 un déflecteur 13 constitué d'une partie frontale associée ou non à des parties latérales. Afin que la porte 7, en position ouverte d'inversion de poussée, assure des performances suffisantes, il est habituellement nécessaire, comme dans l'exemple connu représenté à la figure 1, que la partie avant du panneau interne 11 s'écarte, dans une direction radiale extérieure, d'une surface théorique représentée par la ligne 14, correspondant à une enveloppe théorique de délimitation aérodynamique continue parfaite de la veine du flux secondaire des gaz, représenté par la flèche 15. Une cavité 16 se trouve ainsi formée du côté intérieur de la porte 7 lorsqu'elle se trouve en position fermée correspondant à la poussée directe, délimitée, à l'avant, par le déflecteur 13 de porte et par le bord de déviation 8 de la partie fixe amont 1, du côté externe, par la partie amont du panneau interne 11 de porte et du côté radialement interne, par ladite surface théorique 14. Une partie du flux est forcée par le bord de déviation 8 dans ladite cavité 16, créant ainsi une distorsion du flux et des perturbations dans les écoulements. Il en résulte des pertes aérodynamiques qui sont néfastes au fonctionnement en poussée directe.

D'autres exemples de réalisation du type d'inverseur de poussée de turboréacteur à portes basculantes sont décrits notamment par FR-A-2 486 153, FR-A-2 506 843 et FR-A-2 559 838. Des solutions ont également été proposées pour une amélioration du profil de veine correspondant à une enveloppe aérodynamique de veine correcte en fonctionnement de poussée directe.

Notamment, FR-A-2 621 082 définit une porte d'inverseur comportant une partie interne mobile s'adaptant au profil de veine lors du fonctionnement en poussée directe, masquant ainsi ladite cavité 16, tout en s'escamotant lors du fonctionnement en inversion de poussée pour obtenir les performances requises.

Un autre problème concerne le contrôle du jet inversé lors du fonctionnement en inversion de poussée. FR-A-2 559 838 cité ci-dessus a notamment recherché une solution dans divers aménagements apportés à la forme des bords du puits d'inversion dégagé dans le capotage lors de l'ouverture des portes de l'inverseur. On connaît également l'utilisation dans ce but d'un ensemble de déflecteurs associés à chaque porte, tel que le déflecteur frontal 13 représenté sur la figure 1. Toutefois dans certaines applications, ces aménagements antérieurement connus peuvent se révéler insuffisants pour assurer les performances requises. En effet, l'écoulement doit être dirigé vers l'avant pour créer une poussée opposée à la vitesse d'avancement de l'avion (soit, l'inversion de poussée) et également latéralement pour éviter des impacts avec les parties adjacentes de l'avion (aile ou fuselage ...) tout en évitant de diriger le flux secondaire vers les entrées d'air des différents moteurs, occasionnant des phénomènes de réingestion. On appellera "pilotage des nappes fluides", la technique de ce contrôle des déviations de jet latérales et vers l'avant, tenant compte de ces impératifs.

Par suite, le but de l'invention est d'apporter une solution à ces divers problèmes en procurant une amélioration audit pilotage des nappes du flux inversé et tout en tenant compte des impératifs liés à l'application visée aux moteurs aéronautiques, notamment ceux de masse et d'encombrement minimaux.

L'invention s'applique notamment au type d'inverseur de poussée à portes pivotantes qui a été décrit ci-dessus en référence aux figures 1 et 2 mais elle s'applique également à tout type d'inverseur de poussée dans lequel un ensemble mobile découvre, lors du fonctionnement en inversion de poussée, un passage dénommé "puits d'inversion" par lequel passe le flux secondaire après avoir été bloqué soit par des portes, soit par des obstacles, ou toute forme de volets ou coquilles dans le cas d'un inverseur à grilles. Dans tous les cas, le puits d'inversion est délimité, à l'avant, par un détourage adéquat pratiqué dans la structure fixe de l'inverseur et se terminant par un carénage appelé "bord de déviation" puis, sur les côtés, par des flancs latéraux et enfin, à l'arrière, par les portes ou obstacles.

Ces buts sont atteints conformément à l'invention par un inverseur de poussée d'un type précité dans lequel le puits d'inversion est délimité au moins du côté amont par un bord de déviation fixe solidaire de la structure fixe amont de l'inverseur caractérisé en ce que les sections du bord de déviation obtenues dans des plans longitudinaux se déplaçant d'un bord latéral du puits d'inversion à l'autre présentent une courbure évolutive variable.

Avantageusement sur un bord latéral du puits d'inversion, ladite courbure est positive, le bord de déviation présentant une forme arrondie vers l'extérieur, correspondant à un débit de passage maximal, puis en se déplaçant en direction de l'autre bord latéral, le long du bord de déviation, la courbure diminue, devient elliptique puis s'annule, la section à cet endroit étant plate ou rectiligne et enfin sur l'autre bord latéral, la courbure est négative, le bord de déviation présentant un becquet dirigé vers la veine correspondant à un débit de passage minimal.

Selon les applications envisagées et de manière avantageuse, lesdites dispositions de courbure évolutive du bord de déviation sont appliquées soit lorsque le détourage aval du bord de déviation est constant, soit lorsque le détourage aval du bord de déviation est oblique.

D'autres caractéristiques et avantages de l'invention seront mieux compris à la lecture de la description qui va suivre des modes de réalisation de l'invention, en référence aux dessins annexés sur lesquels :
- la figure 1 représente une demi-vue schématique en coupe longitudinale par un plan passant par l'axe de rotation d'un turboréacteur, d'un inverseur de poussée à portes pivotantes, en position fermée, d'un type connu et qui a fait précédemment l'objet d'une description ;
- la figure 2 représente une vue partielle en perspective de l'inverseur de poussée représenté à la figure 1, en position déployée ;
- la figure 3 représente, selon une vue partielle en perspective analogue à celle de la figure 2, un inverseur de poussée dont le puits d'inversion comporte un bord de déviation à détourage constant réalisé conformément à l'invention ;
- les figures 3A, 3B, 3C, 3D représentent respectivement une section du bord de déviation de l'inverseur de poussée représenté à la figure 3, suivant un plan longitudinal passant respectivement par les lignes A-A, B-B, C-C et D-D de la figure 3 ;
- la figure 4 représente, selon une vue partielle en perspective analogue à celle des figures 2 et 3, un inverseur de poussée dont le puits d'inversion comporte un bord de déviation à détourage oblique réalisé conformément à l'invention ;
- les figures 4A, 4B, 4C et 4D représentent respectivement une section du bord de déviation de l'inverseur de poussée représenté à la figure 4, suivant un plan longitudinal passant respectivement par les lignes A-A, B-B, C-C et D-D de la figure 4.

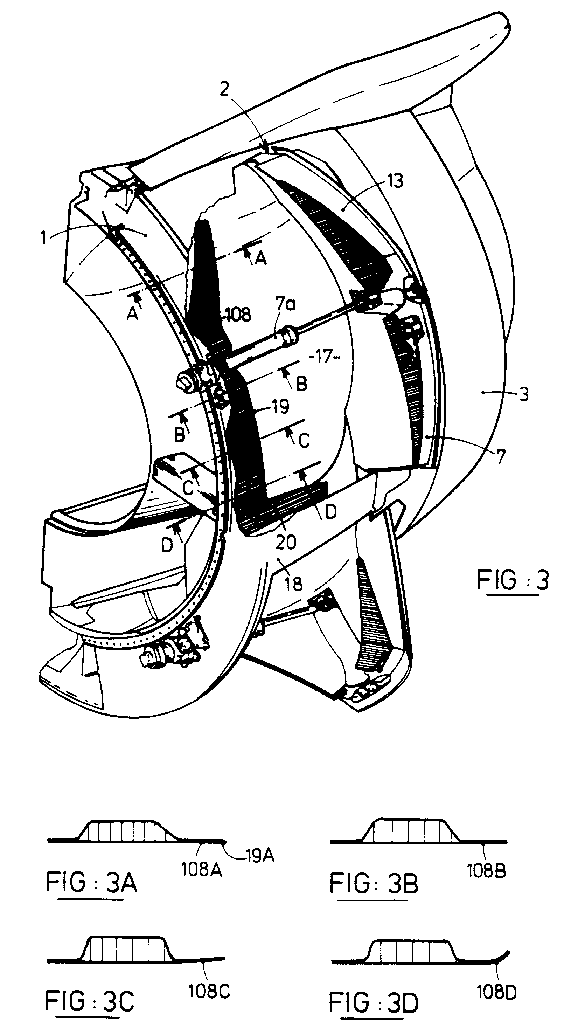

Comme noté précédemment, l'invention s'applique à un inverseur de poussée de tout type connu dit à grilles de déviation, à portes pivotantes ou à obstacles arrière, mais comportant dans tous les cas un puits d'inversion ménagé dans le canal de circulation de la veine fluide des gaz. La figure 3 montre un exemple de réalisation d'un inverseur de poussée à portes pivotantes qui comporte les ensembles et pièces précédemment décrits en référence aux figures 1 et 2 dans un exemple connu de réalisation. Es mêmes références de ces éléments seront conservées dans la suite de la description lorsqu'ils sont identiques ou correspondants. L'inverseur de poussée comporte ainsi la partie fixe amont 1, support du vérin 7a, puis la partie mobile 2 constituée par les portes 7 et le cône arrière fixe 3.

Dans une position ouverte des portes 7, telle que représentée sur la figure 3, correspondant au fonctionnement en inversion de poussée de l'inverseur de poussée, le flux secondaire du turboréacteur, comme cela est connu et a été précédemment noté, est bloqué dans le canal de l'inverseur par la partie arrière des portes pivotantes 7. Ledit flux inversé est ainsi dirigé à travers le puits d'inversion 17 correspondant à l'ouverture ménagée dans la paroi externe du canal annulaire de l'inverseur et délimitée, du côté aval, par la paroi interne et le rebord de la porte 7, sur les côtés, par des flancs latéraux et notamment le bord de poutre fixe 18 et enfin, du côté amont, par le rebord d'extrémité de la paroi interne de la partie fixe amont 1 de l'inverseur constituant la paroi externe du canal annulaire de circulation de la veine fluide des gaz. Côté aval, des aménagements sont notamment apportés, comme cela est connu, au bord du puits d'inversion 17, par les aménagements de la paroi interne de la porte 7 et au moyen de déflecteurs adjoints aux bords de porte, notamment un déflecteur frontal 13 sur le rebord d'extrémité amont de la porte 7, comme représenté sur la figure 3. De manière analogue, du côté amont, le bord du puits d'inversion 17 est équipé d'un carénage solidaire de la partie fixe amont 1 de l'inverseur et prolongeant ladite paroi délimitant la veine des gaz. L'invention concerne les aménagements particuliers apportés à ce carénage dénommé bord de déviation 108, afin d'améliorer le pilotage des nappes du flux inversé. Dans la disposition du bord de déviation 108, un premier objectif recherché est l'obtention d'un débit fluide maximal afin d'assurer les performances globales de l'inverseur, notamment lors du fonctionnement en inversion de poussée. L'influence du bord de déviation 108 est notamment due au facteur de forme correspondant à la forme de la paroi interne du carénage soumise à la pression du flux et déterminée par la courbe observée sur une section du bord de déviation 108 par un plan longitudinal passant par l'axe géométrique de l'inverseur ou axe de rotation du turboréacteur associé. Les coefficients de débit les plus élevés sont obtenus lorsque le bord est de type arrondi, ladite courbe de section présentant une courbure positive, l'extrémité du bord de déviation 108 étant dirigé vers l'extérieur par rapport à l'axe géométrique longitudinal de l'inverseur. Il est cependant fréquent, quel que soit le type d'inverseur de poussée, que les contraintes d'installation, tenant compte des autres impératifs, tels que masse et encombrement, imposés à la définition du puits d'inversion et notamment à l'installation du bord de déviation, ne permettent pas la réalisation d'un profil théorique arrondi optimal du bord de déviation 108. Un des buts de l'invention est de rechercher un compromis optimal entre ces diverses contraintes.

Par suite, comme représenté sur les figures 3A à 3D, le bord de déviation 108 conforme à l'invention dont un exemple de montage et d'application à un inverseur de poussée à portes pivotantes est montré sur la figure 3, comporte un profil variable tel que les courbures des traces ou courbes successives obtenues en section par des plans longitudinaux passant par l'axe longitudinal géométrique de l'inverseur et se déplaçant azimutalement d'un bord latéral à l'autre du bord de déviation 108 et repérées en 108A, 108B, 108C, 108D respectivement sur les figures 3A, 3B, 3C, 3D sont variables et évolutives. La paroi 108A présente ainsi une courbure négative et montre l'amorce d'un becquet 19A à l'extrémité 19 du bord de déviation 108 située sur un côté latéral. La paroi 108B située vers le milieu du puits d'inversion 17, dans le voisinage du vérin 7a de manoeuvre de la porte 7, présente une courbure nulle, la paroi de section étant plate et la trace 108B étant rectiligne. La paroi 108C prend une courbure positive et qui s'accentue en 108D pour devenir elliptique et présenter une courbure importante et un fort arrondi au voisinage de l'autre bord latéral qui est notamment éloigné de tout risque d'interférence entre le flux inversé et des zones voisines de l'avion et qui correspondra à un passage de débit maximal. L'évolution choisie des courbures d'un bord latéral à l'autre du bord de déviation 108 est déterminée en tenant compte des impératifs de continuité des surfaces et de recherche du pilotage optimisé des nappes fluides du flux inversé et d'obtention des performances globales. Dans l'exemple représenté sur la figure 3 et les figures 3A à 3D, on note ainsi une augmentation du coefficient de débit de la section du bord de déviation 108 en passant d'un bord latéral au voisinage de 108A à l'autre bord latéral au voisinage de 108D. On relève également dans l'exemple représenté sur la figure 3 que l'extrémité aval 19 du bord de déviation 108 présente un détourage constant situé dans un plan transversal perpendiculaire à l'axe longitudinal géométrique de l'inverseur. Par contre, un carénage latéral tel que 20 a été adjoint au bord de déviation 108 et cet élément contribue, de manière connue, à l'amélioration du coefficient de débit de l'écoulement du flux inversé ainsi qu'à la réduction des pertes de charge de l'écoulement en jet direct. D'autres aménagements, connus en soi, peuvent être rendus nécessaires pour tenir compte, soit de la proximité du sol, soit de la proximité de la voilure de l'avion et imposent notamment un détourage particulier des angles de porte dits en coin cassé qui se retrouve également dans la forme des bords de partie fixe délimitant le puits d'inversion.

Ces différents paramètres d'influence doivent également être pris en compte dans la définition optimale des nappes du flux inversé.

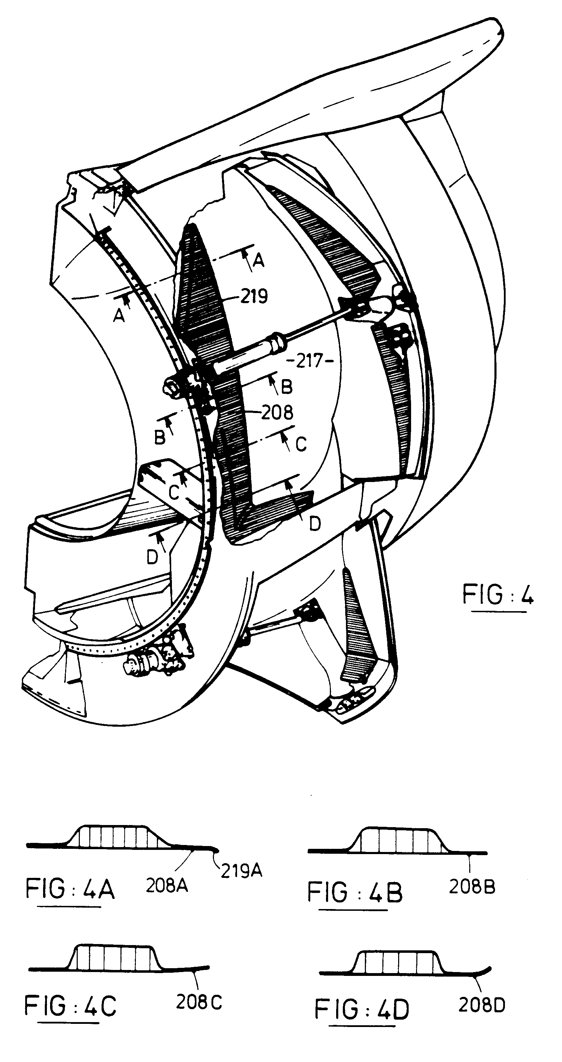

Parmi les moyens éventuellement utilisables pour influencer le pilotage des nappes du flux inversé, FR-A-2 559 838 précédemment cité a notamment indiqué une découpe particulière du bord fixe du canal d'inverseur, au niveau du puits d'inversion et a montré un exemple de réalisation où le bord fixe présente une découpe générale oblique par rapport à un plan transversal perpendiculaire à l'axe longitudinal géométrique de l'inverseur de telle manière que le puits d'inversion est plus large d'un côté que de l'autre. Cette technique rencontre souvent des limites d'application dans les contraintes d'installation du bord de déviation mentionnées précédemment. Chaque fois cependant que ces dispositions sont possibles et que le choix de leur application a été retenu, les aménagements du bord de déviation conformes à l'invention apportent également les avantages complémentaires qui ont été relevés dans l'exemple de réalisation précédemment décrit en référence aux figures 3 et 3A à 3D. Les figures 4 et 4A à 4D montrent ainsi un exemple de réalisation d'un inverseur de poussée de turboréacteur à portes pivotantes d'un type analogue à celui qui a été représenté sur la figure 3 et dans lequel le bord de déviation 208 comporte un rebord d'extrémité 219 délimitant le puits d'inversion 217 réalisé selon les enseignements de FR-A-2 559 838 et présentant par conséquent un détourage oblique. Par contre, conformément à l'invention, on retrouve une évolution azimutale de la courbure des différentes sections du bord de déviation 208 par des plans longitudinaux passant par l'axe géométrique de l'inverseur. Dans l'exemple représenté on retrouve, comme précédemment dans l'exemple représenté sur la figure 3, une zone à débit réduit dont la section 208A présente une courbure négative et un becquet d'extrémité 219A puis une section plate à trace rectiligne 208B suivie d'une zone à débit croissant dont les sections ont une courbure positive, en 208C et 208D, la trace passant d'une forme elliptique à un fort arrondi, au voisinage du bord latéral où le débit atteint sa valeur maximale.

## Revendications

1. Inverseur de poussée de turboréacteur dans lequel un puits d'inversion (17 ; 217) constituant le passage du flux inversé dans la configuration d'inversion de poussée est délimité au moins du côté amont par un bord de déviation (108 ; 208) fixe solidaire de la structure fixe amont (1) de l'inverseur, caractérisé en ce que les sections (108A-108D ; 208A-208D) du bord de déviation (108 ; 208) obtenues dans des plans longitudinaux passant par l'axe géométrique de l'inverseur et se déplaçant d'un bord latéral du puits d'inversion (17 ; 217) à l'autre présentent une courbure évolutive variable.

2. Inverseur de poussée de turboréacteur selon la revendication 1 dans lequel la courbure d'une section (108D ; 208D) du bord de déviation obtenue sur un bord latéral du puits d'inversion (107 ; 207) est positive et correspond à une forme arrondie vers l'extérieur du bord de déviation et à un débit de passage maximal, puis en se déplaçant le long du bord de déviation (108 ; 208) la courbure de la section (108C ; 208C) diminue, devient elliptique puis s'annule, la section (108B ; 208B) à cet endroit étant plate ou rectiligne et enfin, sur l'autre bord latéral, la courbure est négative, la section correspondante (108A ; 208A) présentant un becquet (19A; 219A) dirigé vers la veine et n'autorisant qu'un débit de passage minimal.

3. Inverseur de poussée de turboréacteur selon l'une des revendications 1 ou 2 comportant des portes pivotantes (7) manoeuvrées par un vérin (7a) dans lequel ledit bord de déviation (108) présente une extrémité aval (19) à détourage constant suivant un plan transversal perpendiculaire à l'axe longitudinal géométrique de l'inverseur.

4. Inverseur de poussée de turboréacteur selon l'une des revendications 1 ou 2 comportant des portes pivotantes (7) manoeuvrées par un vérin (7a) dans lequel ledit bord de déviation (208) présente une extrémité aval (219) dont le détourage au moins localement est oblique.

## Claims

1. Turbojet engine thrust reverser in which a reversal well (17; 217) constituting the passage for the reverse flow in the thrust reversal configuration is bounded at least on the upstream side by a fixed deflection edge (108; 208) integral with the upstream fixed structure (1) of the reverser, characterized in that the sections (108A-108D; 208A-208D) of the deflection edge (108; 208) obtained in longitudinal planes passing through the geometrical axis of the reverser and moving from one lateral edge of the reversal well (17; 217) to the other exhibit a variable changing curvature.

2. Turbojet engine thrust reverser according to Claim 1, in which the curvature of a section (108D; 208D) of the deflection edge obtained on a lateral edge of the reversal well (107; 207) is positive and corresponds to an outwardly rounded shape of the deflection edge and to a maximum throughput rate, after which, moving along the deflection edge (108; 208) the curvature of the section (108C; 208C) reduces, becomes elliptical then becomes zero, the section (108B; 208B) at this site being flat or straight-line and finally, on the other lateral edge, the curvature is negative, the corresponding seciton (108A; 208A) exhibiting a spoiler (19A; 219A) turned towards the airstream and allowing only a minimal rate of throughput.

3. Turbojet engine thrust reverser according to one of Claims 1 or 2 including pivoting doors (7) operated by a jack (7a) in which the said deflection edge (108) exhibits an upstream end (19) with a constant cutout profile on a transverse plane perpendicular to the geometrical longitudinal axis of the reverser.

4. Turbojet engine thrust reverser according to one of Claims 1 or 2 including pivoting doors (7) operated by a jack (7a) in which the said deflection edge (208) has a downstream end (219) the cutout profile of which is at least locally oblique.

## Patentansprüche

1. Schubumkehrvorrichtung für eine Turbomaschine, bei der ein Umkehrkanal (17; 217), der den Umkehrstromdurchlaß in der Schubumkehrstellung bildet, wenigstens stromaufwärtsseitig durch eine Ableitkante (108; 208) begrenzt ist, die fest an dem festen, stromaufwärtsseitigen Aufbau (1) der Schubumkehrvorrichtung angebracht ist, dadurch **gekennzeichnet,**
daß die Schnitte (108A-108D; 208A-208D) der Ableitkante (108; 208) in Längsebenen, die durch die geometrische Achse der Schubumkehrvorrichtung hindurchgehen und von einer Seitenkante des Umkehrkanals (17; 217) zu der anderen versetzt sind, eine variable Krümmung aufweisen.

2. Schubumkehrvorrichtung für eine Turbomaschine nach Anspruch 1, bei der die Krümmung eines Schnitts (108D; 208D) der Ableitkante auf einer Seitenkante des Umleitkanals (107; 207) positiv ist und einer nach außerhalb der Ableitkante gerundeten Form und einem maximalen Ausstoßdurchlaß entspricht, wobei die Krümmung des Schnitts (108C; 208C) dann im Verlauf entlang der Ableitkante (108; 208) abnimmt, danach elliptisch wird und dann verschwindet, wobei der Schnitt (108B; 208B) an dieser Stelle eben oder geradlinig ist und schließlich die Krümmung an der anderen Seitenkante negativ ist, wobei der entsprechende Schnitt (108A; 208A) eine Spoilerlippe (19A; 219A) aufweist, die zum Strom gerichtet ist und nur einen minimalen Ausstoßdurchlaß zulaßt.

3. Schubumkehrvorrichtung für eine Turbomaschine nach einem der Ansprüche 1 oder 2 mit Schwenkklappen (7), die durch ein Stellglied (7a) bedient werden, bei der die Ableitkante (108) ein stromabwärts gelegenes Ende (19) mit konstanter Kontur in einer zu der geometrischen Längsachse der Schubumkehrvorrichtung senkrechten Querebene aufweist.

4. Schubumkehrvorrichtung für eine Turbomaschine nach einem der Ansprüche 1 oder 2, mit Schwenkklappen (7), die durch ein Stellglied (7a) bedient werden, bei der die Ableitkante (208) ein stromabwärts gelegenes Ende (219) aufweist, dessen Kontur wenigstens örtlich schrägliegend ist.
